# EUROPEAN PATENT APPLICATION

(11) **EP 4 123 353 A1**
(43) Date of publication of application: **25.01.2023**
(21) Application number: 22185373.2
(22) Date of filing: 18.07.2022
(51) Int. Cl.: G02B 19/00

(54) **REFLECTOR, IMAGING DEVICE, AND VEHICLE**

(30) Priority: 21.07.2021 JP 2021120423
(71) Applicant: Nidec Copal Corporation, Tokyo 174-8550 (JP)
(72) Inventor: HIROKAWA, Takeshi, Tokyo, 174-8550 (JP)
(74) Representative: Becker Kurig & Partner Patentanwälte mbB

(57) **Abstract**

[Problem to be solved] The amount of light that reaches the subject from a light source is increased. [Means for solving the problems] A reflector (5) includes a light condenser (51) that is a reflecting surface for reflecting and condensing part of illumination light emitted from a light source (32). The light condenser (51) includes a first rotationally symmetric portion (53) and a second rotationally symmetric portion (54) having a shape different from that of the first rotationally symmetric portion (53), and the first rotationally symmetric portion (53) is a rotating spheroidal surface. The light source (32) is located near the focal point of the first rotationally symmetric portion (53).

## Description

### BACKGROUND

### Field of the Invention

The invention relates to a reflector, an imaging device, and a vehicle.

### Background

In recent years, monitoring systems have been installed in automobiles to monitor the condition of drivers in order to prevent accidents in automobiles and other vehicles. The monitoring system is equipped with a light source that emits illumination light to illuminate the driver and a camera that captures images of the driver. In such a monitoring system, it is desirable to sufficiently illuminate the driver as the subject.

On the other hand, although not a technique used for monitoring systems, a technique for placing a light source near the focal point of an elliptical reflecting mirror in order to condense light from the light source is disclosed in Patent Literature 1.

### Related Art

### Patent Literature

[Patent Literature 1] Japanese Unexamined Patent Publication No. 2001-135134

### SUMMARY

### Problems to be Solved

However, in the technique disclosed in Patent Literature 1, depending on the degree of diffusion of the light emitted from a light source, some light cannot be condensed by the reflecting mirror, and the amount of light reaching an exposed object is not sufficient.

An object of the invention is to increase the amount of light reaching the subject from a light source and to use the light from the light source effectively.

### Means for Solving the Problems

A reflector according to one aspect of the invention includes a light condenser that is a reflecting surface for reflecting and condensing part of illumination light emitted from a light source. The light condenser includes a first rotationally symmetric portion and a second rotationally symmetric portion having a shape different from that of the first rotationally symmetric portion, and the first rotationally symmetric portion is a rotating spheroidal surface. Then, the light source is located near the focal point of the first rotationally symmetric portion.

### Effects

According to the invention, among the lights emitted from the light source, the amount of light that can be used as the illumination light for illuminating the subject can be increased.

The above and other elements, features, steps, characteristics and advantages of the disclosure will become more apparent from the following detailed description of the preferred embodiments with reference to the attached drawings.

### BRIEF DESCPRIPTION OF THE DRAWINGS

Figure 1 is a diagram schematically showing a part of a vehicle on which an imaging device of one embodiment is mounted.
Figure 2 is an external perspective diagram of the imaging device of one embodiment.
Figure 3 is an exploded perspective diagram of the imaging device of one embodiment.
Figure 4 is a cross-sectional diagram of the imaging device of one embodiment.
Figure 5 is a cross-sectional diagram of a light condenser included in the reflector of one embodiment.
Figure 6 is a diagram illustrating light traveling through the light condenser of one embodiment.

### DESCRIPTION OF THE EMBODIMENTS

Hereinafter, a reflector, an imaging device provided with the reflector, and a vehicle provided with the imaging device according to the embodiments of the invention will be described in detail with reference to the drawings. In each drawing, the same or substantially the same configuration or element may be designated by the same reference numeral, and the description thereof may be omitted to avoid redundancy.

### <Vehicle>

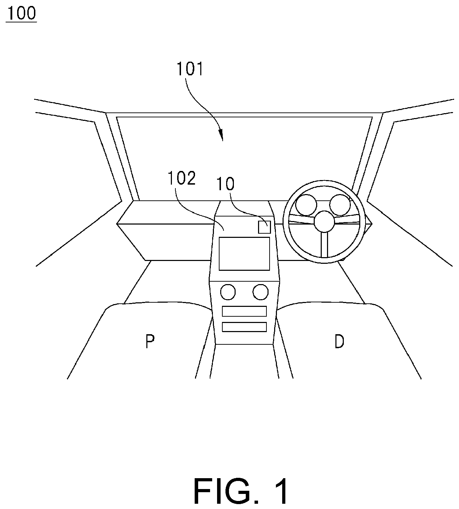

Figure 1 is a diagram schematically showing the inside of a vehicle interior 101 of a vehicle 100 equipped with an imaging device 10. The imaging device 10 is embedded in, for example, an instrument panel (center cluster) 102 between a driver's seat D and a passenger seat P in the vehicle interior 101. The imaging device 10 constitutes a driver monitoring system (DMS) that monitors the driver's condition (decreased attention, signs of falling asleep, etc.) by irradiating, for example, infrared rays or the like toward the driver's seat D.

The place where the imaging device 10 is arranged is not limited to the place shown in Figure 1, and can be arranged at any place where the driver in the driver's seat D can be monitored. Further, the imaging device 10 may monitor the state of the passenger in the passenger seat P and the rear seat (not shown) in addition to the driver.

### <Imaging device 10>

Next, the imaging device 10 will be described.

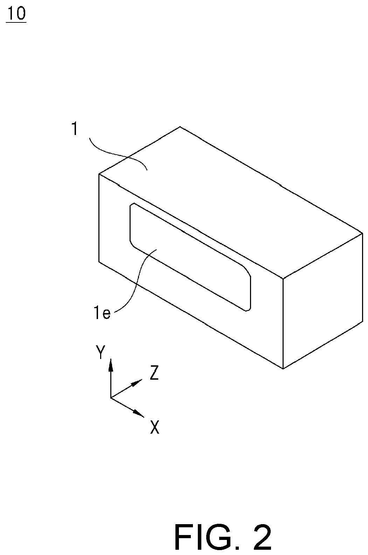

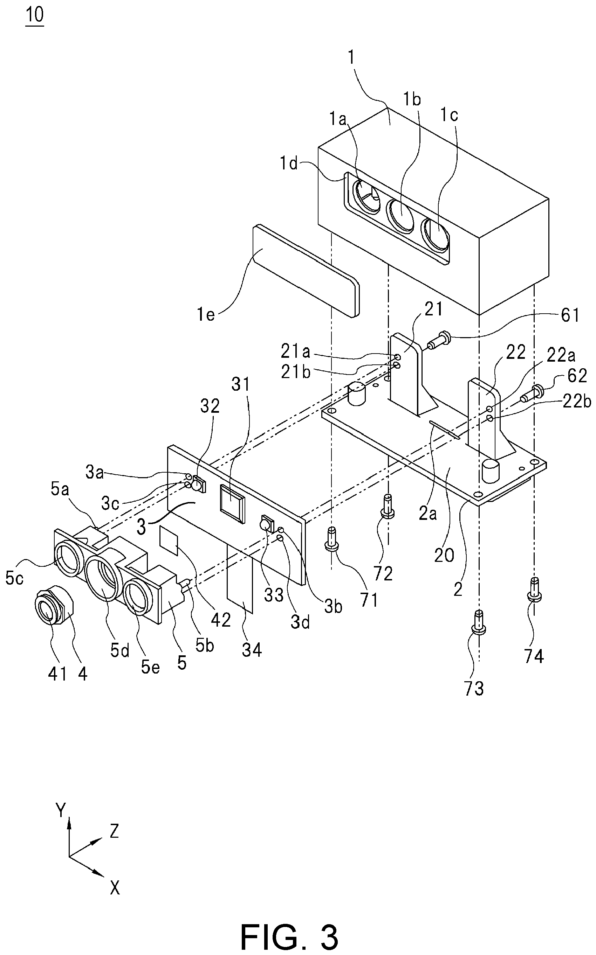

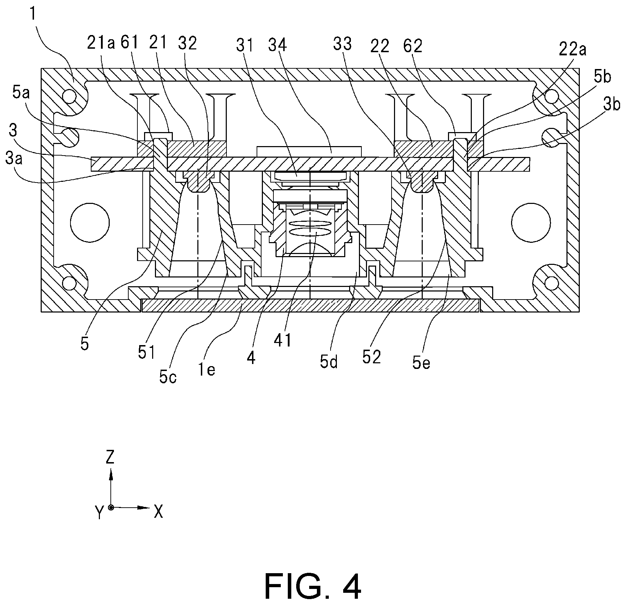

Figure 2 is an external perspective diagram of the imaging device 10, and Figure 3 is an exploded perspective diagram of the imaging device 10. Figure 4 is a cross-sectional diagram of the imaging device 10. For convenience of explanation, an orthogonal coordinate system including an X-axis parallel to one side of the imaging device 10, a Y-axis orthogonal to the X-axis, and a Z-axis orthogonal to the X-axis and the Y-axis is set. The direction along the X-axis is also referred to as a lateral direction of the imaging device 10, the X-axis + side is also referred to as a right side, and the X-axis - side is also referred to as a left side. The direction along the Y-axis is also referred to as a height direction of the imaging device 10, the Y-axis + side is also referred to as an upper side, and the Y-axis - side is also referred to as a lower side. The direction along the Z-axis is also referred to as a depth direction of the imaging device 10, the Z-axis + side is also referred to as a back side, and the Z-axis - is also referred to as a front side.

The imaging device 10 includes a case 1, a base 2, a substrate 3, a lens barrel 4, and a reflector 5.

### <Case 1>

The case 1 is a box-shaped member having an opening surface on the lower side (Y-axis - side). A substantially rectangular recess 1d is formed on the front side (Z-axis - side) surface of the case 1. The case 1 is connected to the base 2 by screws 71-74, and together with the base 2, constitutes a housing having an internal space for accommodating the substrate 3, the lens barrel 4, and the reflector 5.

Screw holes into which the screws 71-74 are inserted are formed at the four corners on the Y-axis - side of the case 1. Three circular openings, 1a, 1b, and 1c, are formed in the recess 1d of the case 1. In the assembled state, an imaging sensor 31 and a lens group 41 held by the lens barrel 4 are located on the back side (Z-axis + side) of the opening 1b, and light sources 32 and 33 supported by the substrate 3 are respectively located on the back side (Z-axis + side) of the openings 1a and 1c. In the assembled state, a cover 1e made of glass or resin is arranged on the substantially rectangular recess 1d.

### <Base 2>

The base 2 is made of a metal material such as aluminum. The base 2 includes a bottom surface 20 and substrate abutters 21 and 22. Screw holes, which are through holes, are formed in the vicinity of the four corners of the bottom surface 20, and the screws 71-74 are inserted therethrough. The base 2 is connected to the case 1 by the screws 71-74 to close the open surface on the Y-axis - side of the case 1, and constitutes the housing together with the case 1 as described above.

The substrate abutters 21 and 22 are formed in a plate shape extending from the bottom surface 20 on the lower side (Y-axis - side) toward the upper side (Y-axis + side). Holes 21a and 22a formed from the back side (Z-axis + side) to the front side (Z-axis - side) are formed in the substrate abutters 21 and 22, respectively. Projections 5a and 5b formed in the reflector 5 to be described later are inserted into the holes 21a and 22a, respectively. The holes 21a and 22a may or may not be through holes.

Screw holes 21b and 22b are formed in the substrate abutters 21 and 22 at positions on the Y-axis - side of the holes 21a and 22a, respectively. The screw holes 21 b and 22b are through holes through which screws 61 and 62 are inserted, respectively. The substrate 3 and the reflector 5 are connected to the base 2 by these screws 61 and 62.

A flexible substrate through hole 2a is formed in the bottom surface 20 of the base 2. The flexible substrate through hole 2a is formed at a position between the substrate abutters 21 and 22. A flexible substrate 34 connected to the substrate 3 to be described later is inserted into the flexible substrate through hole 2a.

### <Substrate 3>

The substrate 3 is a plate-shaped member, and is mounted with electronic components including the imaging sensor 31 and the light sources 32 and 33.

The imaging sensor 31 is an imaging portion that captures light (reflected light) reflected by the driver (subject) among the lights (illumination lights) emitted from the light sources 32 and 33 to be described later. The imaging sensor 31 is mounted on the substrate 3 such that its center is located on a light axis of the lens group 41 to be described later. The imaging sensor 31 is, for example, a photoelectric conversion element such as CMOS or CDD, and photoelectrically converts the reflected light from the subject to output an electric signal. In the imaging device 10, an imaging portion having an image capturing function other than the imaging sensor 31 may be used.

The light sources 32 and 33 emit illumination light for illuminating the subject toward the driver (subject). The light sources 32 and 33 are arranged on the left side (X-axis - side) and the right side (X-axis + side) with respect to the imaging sensor 31, respectively, so as to be aligned in the lateral direction (X-axis direction) with the imaging sensor 31. The light sources 32 and 33 are, for example, LEDs, and emit light having a wavelength in the infrared region (infrared ray, infrared light) when electric power is applied. In the imaging device 10, infrared light from the light sources 32 and 33 is emitted as illumination light toward the subject.

The Z-axis + side of the light sources 32 and 33 is in contact with the substrate 3, and the substrate 3 is in contact with the base 2 made of metal. That is, the light sources 32 and 33 are thermally connected to the base 2 via the substrate 3. As a result, the heat generated when the light sources 32 and 33 emit light can be dissipated from the base 2. In other words, the base 2 acts as a heat radiating member. A part of the terminals or the like of the light sources 32 and 33 may be arranged on the back side (Z-axis + side) of the substrate 3, and the part may be connected to the base 2. Thereby, the heat dissipation effect can be improved.

The flexible substrate 34 extending to the lower side (Y-axis - side) is connected to the substrate 3. The end portion on the upper side (Y-axis + side) of the flexible substrate 34 is connected to the substrate 3, and the extended portion on the Y-axis - side is inserted into the flexible substrate through hole 2a of the base 2. The Y-axis - side end portion of the flexible substrate 34 is connected to an external device (not shown).

### <Lens barrel 4>

The lens barrel 4 is arranged on the front side (Z-axis - side) of the reflector 5 to be described later, and holds the lens group 41. The lens barrel 4 is formed of a resin material such as polycarbonate. The lens barrel 4 has a cylindrical shape, and is inserted into an opening 5d of the reflector 5 to be described later from the Z-axis - side toward the Z-axis + side (that is, toward the imaging sensor 31). Screws for fitting with the opening 5d are formed on the outer peripheral surface of the lens barrel 4. The lens group 41 held in the lens barrel 4 is an optical system for condensing light (reflected light) from the driver (subject) on an image capturing surface of the imaging sensor 31 so as to form an image.

A filter 42 is arranged between the lens group 41 held by the lens barrel 4 and the imaging sensor 31. The filter 42 is, for example, an infrared transmission filter (IR filter) that shields light having a wavelength other than the infrared region and transmits infrared light. As a result, it is possible to suppress that ambient light or the like different from the infrared light emitted from the light sources 32 and 33 from entering the imaging sensor 31.

### <Reflector 5>

Similar to the lens barrel 4, the reflector 5 is made of a resin material such as polycarbonate. The reflector 5 includes three cylindrical through holes, an opening 5c, the opening 5d, and an opening 5e, extending in the Z-axis direction, and light condensers 51 and 52 formed on inner circumferences of the openings 5c and 5e, the details of which will be described later. Screws for fitting with the lens barrel 4 are formed on the inner peripheral surface of the opening 5d. The light sources 32 and 33 provided on the substrate 3 are located on the Z-axis + side of the openings 5c and 5e, respectively.

The projections 5a and 5b extending to the Z-axis + side are formed on the Z-axis + side surface of the reflector 5. The projections 5a and 5b are inserted into the through holes 3a and 3b of the substrate 3, respectively, and further inserted into the holes 21a and 22a of the base 2. On the Z-axis + side surface of the reflector 5 (that is, the surface facing the substrate 3), screw holes into which the screws 61 and 62 are inserted are formed. The substrate 3 has through holes 3c and 3d into which the screws 61 and 62 are inserted.

### <Light condenser 51, 52>

Hereinafter, the light condensers 51 and 52 included in the reflector 5 will be described in detail. The light condenser 51 is a reflecting surface formed on the inner peripheral surface of the opening 5c and reflecting and condensing part of the illumination light emitted from the light source 32. The light condenser 52 is a reflecting surface formed on the inner peripheral surface of the opening 5e and reflecting and condensing part of the illumination light emitted from the light source 33. The light condensers 51 and 52 are the same in other respects, therefore the following description will be given for the light condenser 51 as a representative.

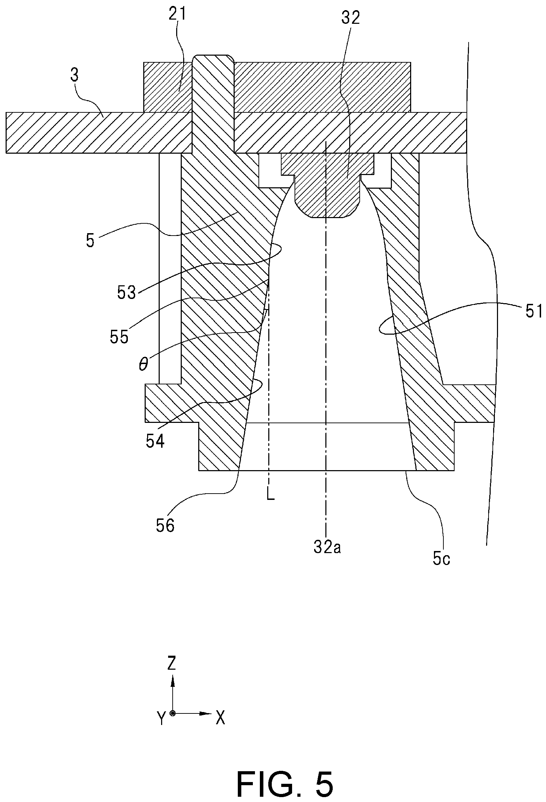

Figure 5 is a cross-sectional diagram of the reflector 5 in the ZX plane, and shows an enlarged view of the vicinity of the light condenser 51.

The light condenser 51 has a rotationally symmetric shape with an light axis 32a of the lens (optical system) attached to the LED constituting the light source 32 as an axis (rotational symmetry axis). The light condenser 51 may be a reflective surface on which a metal such as aluminum is vapor-deposited to reflect the illumination light from the light source 32. The light condenser 51 includes a first rotationally symmetric portion 53 and a second rotationally symmetric portion 54, and the shape of the first rotationally symmetric portion 53 and the shape of the second rotationally symmetric portion 54 are different.

### <First rotationally symmetric portion 53>

The first rotationally symmetric portion 53 is arranged on the light source 32 side (Z-axis + side) with respect to the second rotationally symmetric portion 54. The first rotationally symmetric portion 53 is a rotating spheroidal surface. The first rotationally symmetric portion 53 is arranged such that the light source 32 is located near the focal point of the rotating spheroidal surface. The end portion of the first rotationally symmetric portion 53 on the opposite side (that is, the Z-axis - side) of the light source 32 is a connecting end portion 55 connected to the second rotationally symmetric portion 54. The connecting end portion 55 is parallel to a plane (XY plane) orthogonal to the light axis 32a, which is the rotational symmetry axis. At the connecting end portion 55, an opening area of the first rotationally symmetric portion 53 on the plane parallel to the XY plane is maximized.

### <Second rotationally symmetric portion 54>

The second rotationally symmetric portion 54 is arranged on the subject side (Z-axis - side) with respect to the first rotationally symmetric portion 53. As described above, the shape of the second rotationally symmetric portion 54 is different from the shape of the first rotationally symmetric portion 53. As shown in Figure 5, the second rotationally symmetric portion 54 is a rotating trapezoidal surface. The second rotationally symmetric portion 54 is not limited to the rotating trapezoidal surface, and may be, for example, a rotating hyperboloid or a rotating spheroidal surface having a size different from that of the first rotationally symmetric portion 53.

The end portion on the Z-axis + side of the second rotationally symmetric portion 54 is the connecting end portion (first end portion) 55 described above, and is connected to the first rotationally symmetric portion 53. An end portion (second end portion) 56 on the Z-axis - side of the second rotationally symmetric portion 54 is formed parallel to the plane (XY plane) orthogonal to the light axis 32a, which is the rotational symmetry axis, that is, parallel to the connecting end portion 55. The length of the second rotationally symmetric portion 54 along the Z-axis (that is, the length between the connecting end portion 55 and the end portion 56) may be arbitrarily set according to the size of the imaging device 10 and the like. The end portion 56 does not have to be parallel to the XY plane, and the end portion 56 may be formed so as to have a predetermined angle with respect to the XY plane in accordance with the installation location of the imaging device 10 and the like. In other words, the end portion 56 does not have to be parallel to the connecting end portion 55.

The second rotationally symmetric portion 54 has a shape in which the diameter of the connecting end portion 55 and the diameter of the end portion 56 are different. As shown in Figure 5, the diameter of the end portion 56 is larger than the diameter of the connecting end portion 55. Here, let θ be a spread angle of the end portion 56 with respect to the connecting end portion 55. The spread angle θ is an angle formed by the end portion 56 with respect to a reference line L parallel to the Z-axis. In this embodiment, the spread angle θ is 9.23° ± 1°. The spread angle θ is not limited to the above value, and can be a value of 7 ° or more and 12° or less.

The diameter of the end portion 56 of the second rotationally symmetric portion 54 may be smaller than the diameter of the connecting end portion 55, not limited to the case where the diameter of the end portion 56 is larger than the diameter of the connecting end portion 55. Further, the diameter of the connecting end portion 55 and the diameter of the end portion 56 of the second rotationally symmetric portion 54 may be equal, not limited to the case where the diameter of the connecting end portion 55 and the diameter of the end portion 56 are different. In this case, the second rotationally symmetric portion 54 is a cylindrical inner peripheral surface.

### <Traveling of illumination light in the light condenser 51>

Illumination light traveling through the light condenser 51 having the above shape will be described.

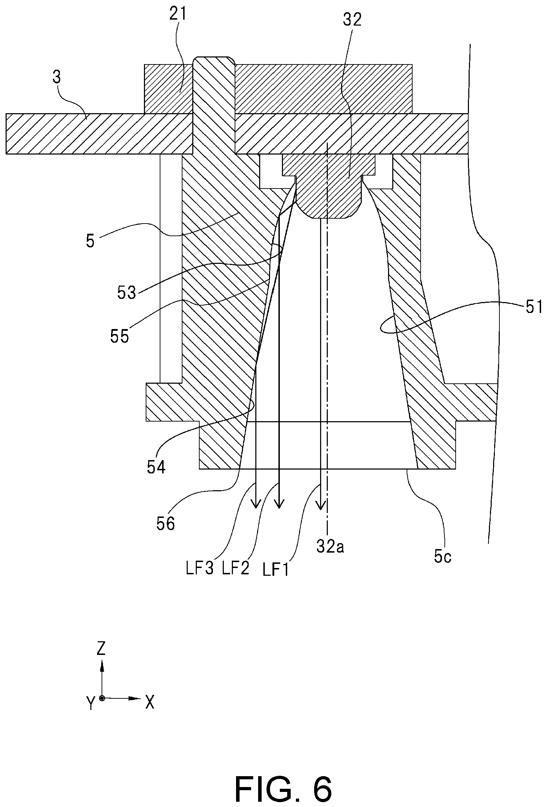

Figure 6 is a diagram schematically showing a state in which part of the illumination light emitted from the light source 32 travels through the light condenser 51 shown in the Figure 5. In Figure 6, among the illumination lights from the light source 32, lights LF1, LF2, and LF3 are shown as representatives. The light LF1 is light emitted from the light source 32 after passing through a lens attached to the LED constituting the light source 32. The lights LF2 and LF3 are lights emitted from the light source 32 without passing through the lens attached to the LED constituting the light source 32.

The light LF1 travels in a direction parallel to the light axis 32a by being condensed by a lens attached to the LED constituting the light source 32. Therefore, the light LF1 is emitted from the reflector 5 toward the subject on the Z-axis - side without being reflected by the light condenser 51.

Since the light LF2 does not pass through the lens attached to the LED constituting the light source 32, it is not condensed in the direction parallel to the light axis 32a and is emitted from the light source 32 in a direction of diffusion with respect to the light axis 32a. The light LF2 emitted in this way reaches the first rotationally symmetric portion 53, is reflected, travels in parallel with the light axis 32a, and is emitted from the reflector 5 toward the subject on the Z-axis - side.

The light LF3 also emits light from the light source 32 in a direction of diffusion with respect to the light axis 32a for the same reason as the light LF2. However, as shown in Figure 6, the degree of diffusion of the light LF3 is smaller than that of the light LF2. Such light LF3 does not reach the first rotationally symmetric portion 53 of the light condenser 51. The light LF3 reaches the second rotationally symmetric portion 54 and is reflected on the Z-axis - side of the connecting end portion 55, travels in parallel with the light axis 32a, and is emitted from the reflector 5 toward the subject on the Z-axis - side.

The light condenser 52 has the same shape as the light condenser 51. Therefore, the illumination light from the light source 33 traveling through the light condenser 52 is also emitted toward the subject on the Z-axis - side in the same manner as the illumination light traveling through the light condenser 51 described above.

According to the embodiment described above, the following effects can be obtained.

The reflector 5 includes the light condensers 51 and 52, which include the first rotationally symmetric portion 53 having a rotating spheroidal surface shape, and the second rotationally symmetric portion 54 having a shape different from that of the first rotationally symmetric portion 53. The light sources 32 and 33 are located near the focal point of the first rotationally symmetric portion 53 with respect to the light condenser 51 and 52. As a result, the traveling direction of the light LF2 and LF3 emitted from the light sources 32 and 33 in the direction of diffusion (that is, the direction of not reaching the subject) can be changed to the direction of reaching the subject. In particular, since the shapes of the first rotationally symmetric portion 53 and the second rotationally symmetric portion 54 are different, light such as the light LF3 having a small degree of diffusion can also be reflected by the light condenser 51 and emitted toward the subject. As a result, light that could not illuminate the subject in the past can be used as illumination light, and among the lights emitted from the light sources 32 and 33, it is possible to increase the amount of light that can be used as the illumination light for illuminating the subject.

The imaging device 10 includes the light sources 32 and 33, the reflector 5, and the imaging sensor 31 that receives light reflected by the subject. As a result, the subject illuminated by the illumination light with an increased amount of light that can be used by the light condenser 51 can be imaged, such that an image in which the subject is clearly captured can be generated. Further, by using such an imaging device 10 for the DMS, it is possible to improve the monitoring accuracy of the state of the driver who is the subject.

Although various embodiments and modifications have been described above, the invention is not limited thereto. Other aspects considered within the scope of the technical idea of the invention are also included within the scope of the invention.

The case in which the imaging device 10 of the embodiment includes the two light sources, 32 and 33, and the two light condensers, 51 and 52, has been described as an example, but the imaging device 10 may include one light source 32 and one light condenser 51, or may include three or more light sources and light condensers.

Features of the above-described preferred embodiments and the modifications thereof may be combined appropriately as long as no conflict arises. While preferred embodiments of the present disclosure have been described above, it is to be understood that variations and modifications will be apparent to those skilled in the art without department from the scope and spirit of the present disclosure. The scope of the present disclosure, therefore, is to be determined solely by the following claims.

### [Descriptions of Reference Numerals]

4 Lens barrel; 5 Reflector, 10 Imaging device; 31 Imaging sensor; 32, 33 Light source; 41 Lens group; 51, 52 Light condenser; 53 First rotationally symmetric portion; 54 Second rotationally symmetric portion; 55 Connecting end portion; 56 End portion; 100 Vehicle; 101 Vehicle interior.

## Claims

1. A reflector (5), comprising:
a light condenser (51, 52) that is a reflecting surface for reflecting and condensing part of illumination light emitted from a light source (32, 33),
wherein the light condenser (51, 52) comprises a first rotationally symmetric portion (53) and a second rotationally symmetric portion (54) having a shape different from that of the first rotationally symmetric portion (53),
the first rotationally symmetric portion (53) is a rotating spheroidal surface, and
the light source (32, 33) is located near a focal point of the first rotationally symmetric portion (53).

2. The reflector (5) according to claim 1, wherein the second rotationally symmetric portion (54) comprises a first end portion (55) connected to the first rotationally symmetric portion (53) and a second end portion (56) on an opposite side of the first end portion (55), and a diameter of the first end portion (55) and a diameter of the second end portion (56) are different.

3. The reflector (5) according to claim 2, wherein the second rotationally symmetric portion (54) is a rotating trapezoidal surface.

4. The reflector (5) according to claim 2 or 3, wherein the second rotationally symmetric portion (54) has a shape in which the diameter of the second end portion (56) is larger than the diameter of the first end portion (55), and an spread angle of the second end portion (56) with respect to the first end portion (55) is 7° or more and 12° or less.

5. An imaging device (10), comprising:
the light source (32, 33) that emits illumination light for illuminating a subject,
the reflector (5) according to any one of claims 1 to 4, and
an imaging portion for receiving light reflected by the subject among the illumination lights.

6. A vehicle (100), comprising:
a vehicle interior (101), and
the imaging device (10) according to claim 5, which is arranged in the vehicle interior (101).
